# EUROPEAN PATENT SPECIFICATION

(11) **EP 2 330 863 B1**
(45) Date of publication and mention of the grant of the patent: **10.07.2013**
(21) Application number: 10193461.0
(22) Date of filing: 02.12.2010
(51) Int. Cl.: H04W 16/26, H04B 7/155, H04B 7/26, H04L 1/00

(54) **Radio communication system and radio communication method**
Funkkommunikationssystem und Funkkommunikationsverfahren
Système de communication radio et procédé de communication radio

(30) Priority: 03.12.2009 JP 2009275760
(43) Date of publication of application: 08.06.2011
(73) Proprietor: NTT DoCoMo, Inc., Tokyo 100-6150 (JP)
(72) Inventor: Fujii, Hiromasa, Chiyoda-ku, Tokyo 100-6150 (JP); Shen, Jiyun, Chiyoda-ku, Tokyo 100-6150 (JP); Ohya, Tomoyuki, Chiyoda-ku, Tokyo 100-6150 (JP)
(74) Representative: Schwabe - Sandmair - Marx

(56) References cited:
- WO-A1-2006/088400
- WO-A1-2007/064249
- US-A1- 2002 028 675
- US-A1- 2009 010 215
- US-B1- 7 406 295

## Description

### BACKGROUND OF THE INVENTION

### 1. Field of the invention

The present invention relates to a radio communication system including a radio base station for forming a cell in which at least one relay apparatus is provided and a relay apparatus provided in the cell and to a radio communication method in a radio communication system including the radio base station and the relay apparatus.

### 2. Description of the Related Art

In recent years, attention has been focused on a radio communication system in which the Amplify-and-Forward (AF) type of relay apparatus is provided in a cell of a base station (for example, Machida, Haruaki, Higuchi, Kenichi, "A Study on Adaptive Amplify-and-Forward Relying for Cellular System", IEICE, General Conference, Transaction, 2008_Communications (1), page 478, and Machida, Haruaki, Higuchi, Kenichi, "Performance Evaluation on Adaptive Amplify-and-Forward Relaying for Cellular System", IEICE, Society Conference, Transaction, 2008_Communications (1), page 317). In this radio communication system, the relay apparatus amplifies a downlink signal received from the radio base station to relay to a radio communication terminal, while further amplifying an uplink signal received from the radio communication terminal to relay to the radio base station. By such relay transmission of signals by the relay apparatus, it is possible to expand coverage of the radio base station.

However, in the above-mentioned radio communication system, transmission and reception of signals using non-directional beams aimed at the entire cell is performed between the radio base station and a relay apparatus provided in one direction inside the cell of the radio base station. Accordingly, in the radio communication system for performing relay transmission as described above, signals that are transmitted and received between the radio base station and the relay apparatus are interfering signals to signals that are transmitted and received between the radio base station and another relay apparatus or another radio communication terminal, and there is a problem that throughput of the entire radio communication system deteriorates.

Document US 2009/0010215 A1 discloses a system for allocating a wireless resource for a space division multiple access system. The system includes channel state recognition unit to recognize a channel state of wireless channels generated among adjacent nodes including a source node, a relay node, and a destination node; and a wireless resource allocation unit to control at least one of an amount of channel state information fed back from the destination node to the source node, and a relay level of a relay signal, the relay signal being generated by relaying a source signal transmitted from the source node, according to the channel state.

### SUMMARY OF THE INVENTION

In accordance to the present invention, a radio communication system as set forth in claim 1 and a radio communication method as set forth in claim 10 are provided. Embodiments of the invention are claimed in the dependent claims.

The present Invention was made in view of the above-mentioned respect, and it is an object of the invention to provide a radio base station, a relay apparatus and a radio communication method capable of improving entire throughput in a radio communication system for expanding coverage of the radio base station by relay transmission using the relay apparatus.

A radio base station according to a first aspect of the disclosure is a radio base station for forming a cell in which at least one relay apparatus is provided, and includes an acquiring unit configured to acquire, from each radio communication terminal, reception power information of a first control signal received from the radio base station by the each radio communication terminal and reception power information of a second control signal received from the relay apparatus by the each radio communication terminal, a communication mode determining unit configured to determine a communication mode for each radio communication terminal from among a direct mode for communicating without via the relay apparatus, a relay mode for communicating via the relay apparatus by using a directional beam transmitted between the radio base station and the relay apparatus, and a combined mode for communicating by combining the direct mode and the relay mode, based on the reception power information acquired from the each radio communication terminal, and a communication unit configured to communicate with the each radio communication terminal by using the communication mode determined for the each radio communication terminal.

A relay apparatus according to a second aspect of the disclosure is a relay apparatus provided in a cell formed by a radio base station, and includes a transmission unit configured to transmit a received signal that is amplified with a predetermined amplification factor by using a directional beam for the radio base station when the received signal from a radio communication terminal under the relay apparatus includes identification information of the relay apparatus, while transmitting a received signal that is amplified with a predetermined amplification factor to a radio communication terminal under the relay apparatus when the received signal from the radio base station includes identification information of the relay apparatus.

A radio communication method according to the second aspect of the disclosure is a radio communication method in a radio communication system including a radio base station and at least one relay apparatus provided in a cell formed by the radio base station, and includes the steps in the radio base station of acquiring, from each radio communication terminal, reception power information of a first control signal received from the radio base station by the each radio communication terminal and reception power information of a second control signal received from the relay apparatus by the each radio communication terminal, determining a communication mode for each radio communication terminal from among a direct mode for communicating without via the relay apparatus, a relay mode for communicating via the relay apparatus by using a directional beam transmitted between the radio base station and the relay apparatus, and a combined mode for communicating by combining the direct mode and the relay mode, based on the reception power information acquired from the each radio communication terminal, and communicating with the each radio communication terminal by using the communication mode determined for the each radio communication terminal.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.
FIG. 1 is a schematic diagram of a radio communication system according to Embodiment 1 of the invention;
FIG. 2A is a diagram illustrating a communication mode according to Embodiment 1 of the invention;
FIG. 2B is a diagram illustrating another communication mode according to Embodiment 1 of the invention;
FIG. 2C is a diagram illustrating still another communication mode according to Embodiment 1 of the invention;
FIG. 2D is a diagram illustrating still another communication mode according to Embodiment 1 of the invention;
FIG. 3 is a functional block diagram of a radio base station according to Embodiment 1 of the invention;
FIG. 4 is a table showing reception power information acquired in the radio base station according to Embodiment 1 of the invention;
FIG. 5A is a diagram illustrating radio resources according to Embodiment 1 of the invention;
FIG. 5B is another diagram illustrating radio resources;
FIG. 6 is a functional block diagram of a relay apparatus according to Embodiment 1 of the invention;
FIG. 7 is a sequence diagram illustrating a radio communication method according to Embodiment 1 of the invention.
FIG. 8 is a flowchart illustrating the communication mode determining operation by the radio base station according to Embodiment 1 of the invention;
FIG. 9 is a diagram illustrating allocation of radio resources to radio communication terminals by the radio base station according to Embodiment 1 of the invention;
FIG. 10 is a schematic diagram of a radio communication system according to Embodiment 2 of the invention;
FIG. 11 is a schematic diagram of a radio communication system according to Embodiment 3 of the invention;
FIG. 12 is a schematic diagram of a radio communication system according to Embodiment 4 of the invention;
FIG. 13 is a schematic diagram of a radio communication system according to Embodiment 5 of the invention;
FIG. 14 is a schematic block diagram of a relay apparatus according to Embodiment 6 of the invention; and
FIG. 15 is a flowchart illustrating transmission power control by a radio base station according to Embodiment 7 of the invention.

### DETAILED DESCRIPTION OF THE INVENTION

Embodiments of the present invention will be described below. In addition, in the following description of drawings, the same or similar portions are assigned the same or similar reference numerals.

### [Embodiment 1]

### (Entire schematic configuration of a radio communication system)

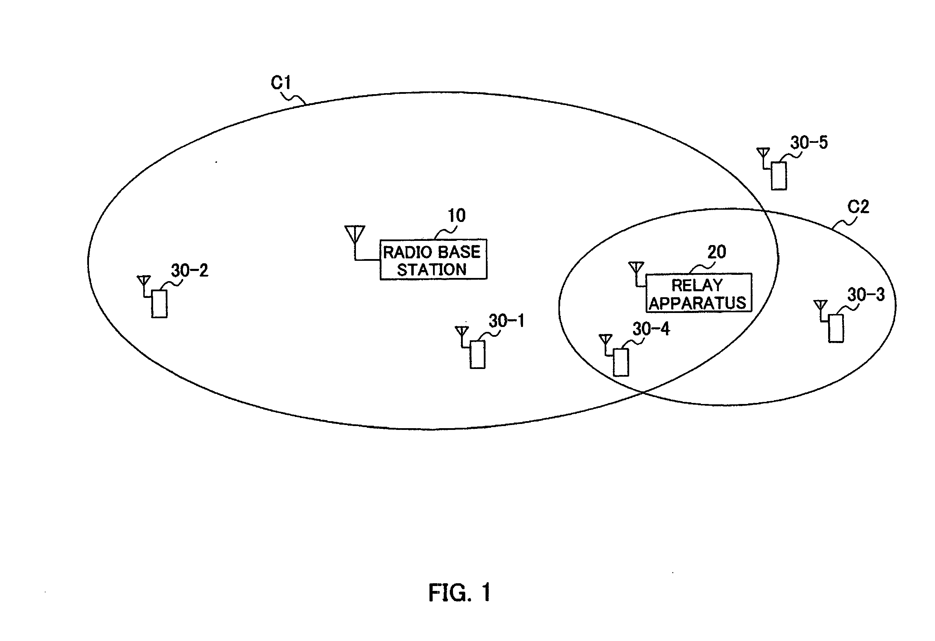

FIG. 1 is a schematic diagram of a radio communication system according to Embodiment 1. As shown in FIG. 1, the radio communication system includes a radio base station 10, non-reproduction type (Amplify-and-Forward (AF)) relay apparatus 20 provided in a cell C1 of the radio base station 10, and radio communication terminals 30-1 to 30-5. Hereinafter, when the radio communication terminals 30-1 to 30-5 are not distinguished, the terminals are referred to as radio communication terminals 30. In addition, the radio base station 10, relay apparatus 20 and radio communication terminals 30 included in the radio communication system are not limited to the numbers and forms as shown in FIG. 1.

Based on reception power information acquired from each radio communication terminal 30, the radio base station 10 determines a communication mode for each radio communication terminal 30 from among a direct mode, a relay mode, and a combined mode in which the direct mode and the relay mode are combined. For example, in the radio communication system as shown in FIG. 1, the radio base station 10 determines a communication mode of the radio communication terminal 30-2 to be the direct mode, a communication mode of the radio communication terminal 30-3 to be the relay mode, communication modes of the radio communication terminals 30-1 and 30-4 to be a capacity increasing mode included in the combined mode, and a communication mode of the radio communication terminal 30-5 to be an area expanding mode included in the combined mode.

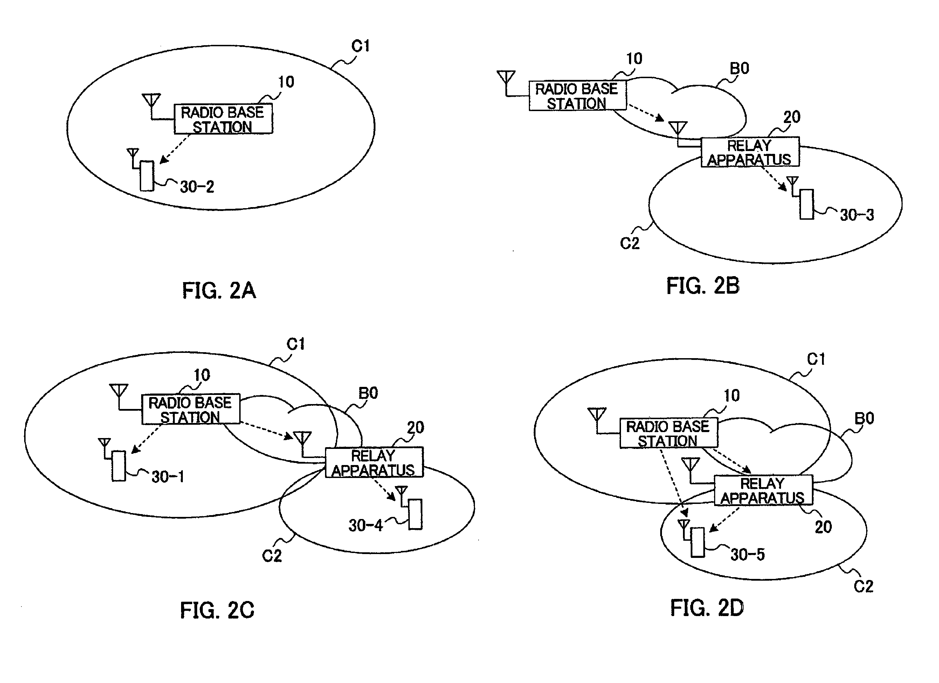

Herein, the direct mode is a communication mode in which the radio base station 10 communicates with the radio communication terminal 30 without via the relay apparatus 20. More specifically, in downlink communications, as shown in FIG. 2A, the radio base station 10 transmits a downlink signal for the radio communication terminal 30-2 by using a non-directional beam (not shown in the figure) for the entire cell C1. Meanwhile, not shown in the figure, in uplink communications, the radio base station 10 receives an uplink signal transmitted from the radio communication terminal 30-2. In addition, the radio base station 10 may communicate with the radio communication terminal 30-2 by using a directional beam instead of the non-directional beam.

The relay mode is a communication mode in which the radio base station 10 communicates with the radio communication terminal 30 via the relay apparatus 20 by using a directional beam transmitted between the radio base station 10 and the relay apparatus 20. More specifically, in downlink communications, as shown in FIG. 2B, the radio base station 10 transmits a downlink signal for the radio communication terminal 30-3 by using a directional beam B0 for the relay apparatus 20. The relay apparatus 20 amplifies the downlink signal received from the radio base station 10 to transmit to the radio communication terminal 30-3. Meanwhile, not shown in the figure, in uplink communications, the relay apparatus 20 amplifies an uplink signal received from the radio communication terminal 30-3, and transmits the amplified signal using a directional beam for the radio base station 10. The radio base station 10 receives the uplink signal transmitted from the relay apparatus 20.

The combined mode includes the capacity increasing mode in which the direct mode and the relay mode are combined among a plurality of radio communication terminals 30, and the area expanding mode in which the direct mode and the relay mode are combined in one radio communication terminal 30.

The capacity increasing mode is a communication mode in which the radio base station 10 communicates with one radio communication terminal 30 by the direct mode, while further communicating with another radio communication terminal 30 by the relay mode, by using same radio resources. More specifically, in downlink communications, as shown in FIG. 2C, the radio base station 10 transmits a downlink signal for the radio communication terminal 30-1 by using the non-directional beam (not shown in the figure) for the entire cell C1, while further transmitting a downlink signal for the radio communication terminal 30-4 by using the directional beam B0 for the relay apparatus 20. The relay apparatus 20 amplifies the downlink signal received from the radio base station 10 by using the directional beam B0, and transmits the amplified signal to the radio communication terminal 30-4. Meanwhile, not shown in the figure, in uplink communications, the relay apparatus 20 amplifies an uplink signal received from the radio communication terminal 30-4, and transmits the amplified signal using the directional beam aimed at the radio base station 10. The radio base station 10 receives the uplink signal transmitted from the relay apparatus 20, while further receiving the uplink signal transmitted from the radio communication terminal 30-1.

The area expanding mode is a communication mode in which the radio base station 10 communicates with the radio communication terminal 30 by the direct mode, while further communicating with the same radio communication terminal 30 by the relay mode, by using the same radio resources. More specifically, in downlink communications, as shown in FIG. 2D, the radio base station 10 transmits a downlink signal for the radio communication terminal 30-5 by using the non-directional beam (not shown in the figure) for the entire cell C1, while further transmitting the same downlink signal by using the directional beam B0 for the relay apparatus 20. The relay apparatus 20 amplifies the downlink signal received from the radio base station 10 by using the directional beam B0, and transmits the amplified signal to the same radio communication terminal 30-5. Meanwhile, not shown in the figure, in uplink communications, the relay apparatus 20 amplifies an uplink signal received from the radio communication terminal 30-5, and transmits the amplified signal by using the directional beam for the radio base station 10. The radio base station 10 receives the uplink signal transmitted from the relay apparatus 20, while further receiving the same uplink signal transmitted from the radio communication terminal 30-5.

The radio base station 10 communicates with each radio communication terminal 30 by using the communication mode determined for each radio communication terminal as described above.

### (Functional configuration of the radio communication system)

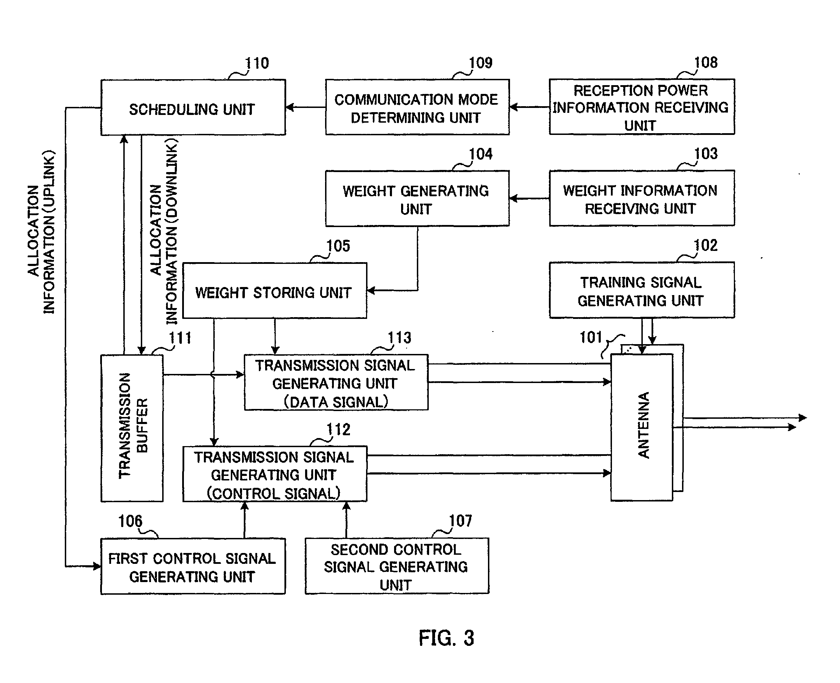

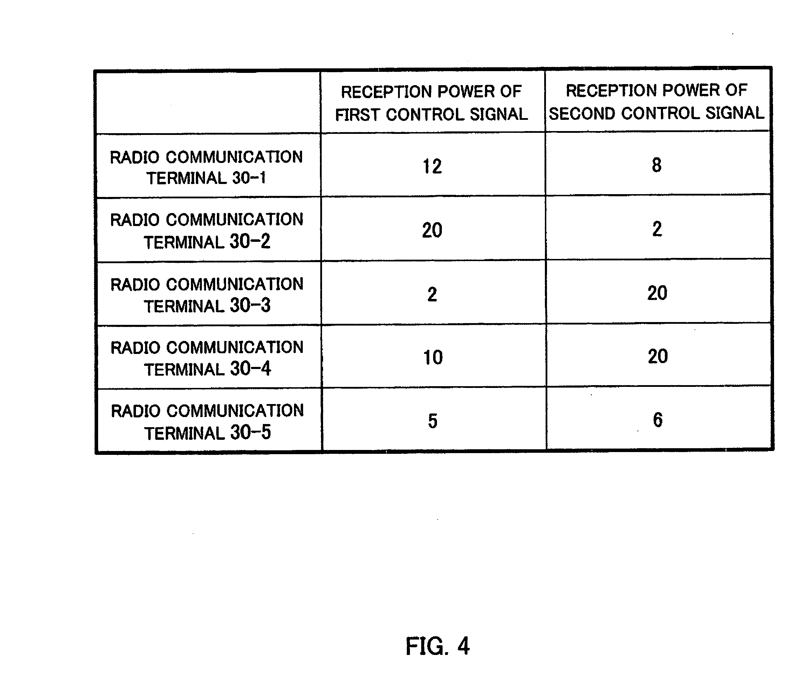

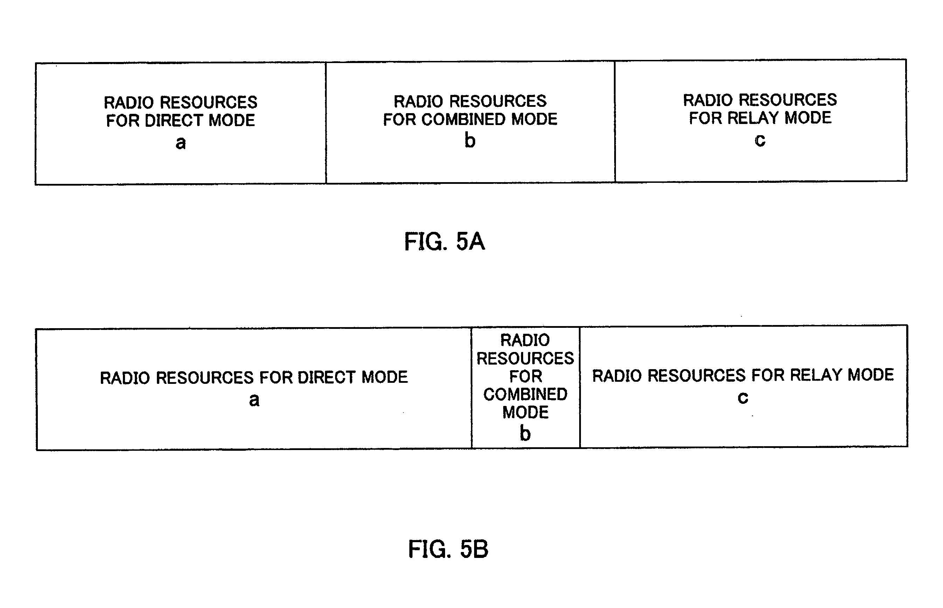

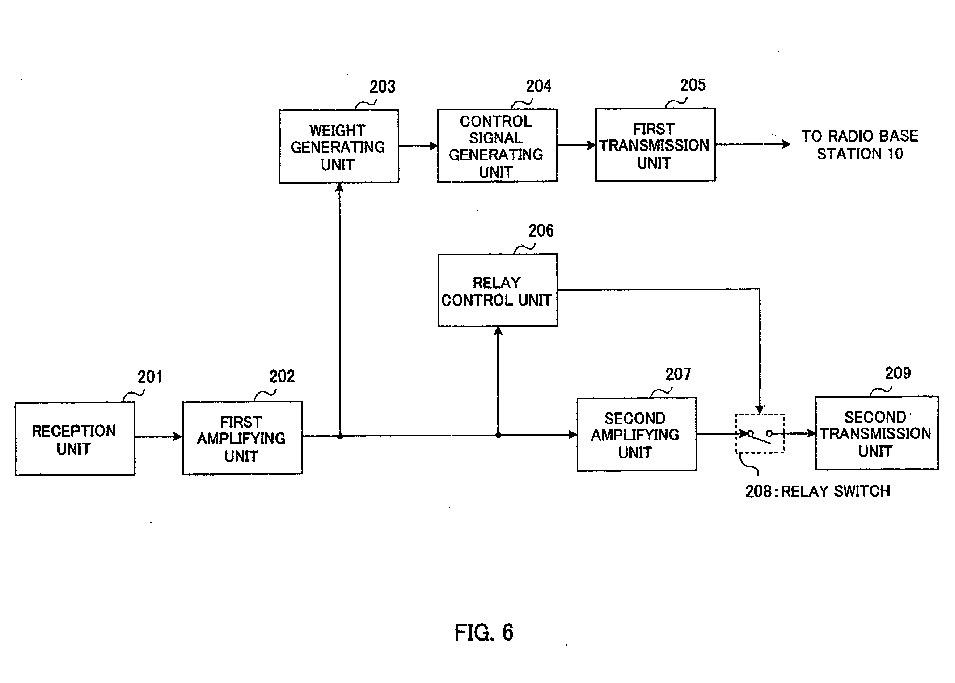

Described next are functional configurations of the radio base station 10 and the relay apparatus 20 included in the radio communication system according to Embodiment 1. FIG. 3 is a functional block diagram of the radio base station 10, FIGs. 4, 5A and 5B are diagrams to explain the functional configuration of the radio base station 10, and FIG. 6 is a functional block diagram of the relay apparatus 20.

### (1) Functional configuration of the radio base station 10

As shown in FIG. 3, the radio base station 10 is provided with an array antenna 101 comprised of a plurality of antennas, a training signal generating unit 102, a weight information receiving unit 103, a weight generating unit 104, a weight storing unit 105, a first control signal generating unit 106, a second control signal generating unit 107, a reception power information receiving unit 108, a communication mode determining unit 109, a scheduling unit 110, a transmission buffer 111, and transmission signal generating units 112, 113.

The training signal generating unit 102 generates a training signal to be transmitted from the array antenna 101 to the relay apparatus 10. In addition, the training signal is a dummy signal to determine an optimal weight of the directional beam B0 for the relay apparatus 20.

The weight information receiving unit 103 receives, from the relay apparatus 20, weight information determined based on a reception result of the training signal in the relay apparatus 20. The weight generating unit 104 generates the optimal weight of the directional beam B for the relay apparatus 20, based on the weight information received in the weight information receiving unit 103. The weight storing unit 105 associates the generated weight with the relay apparatus 20 to store.

The first control signal generating unit 106 generates a first control signal to be transmitted from the array antenna 101 by using the non-directional beam for the entire cell C1. Meanwhile, the second control signal generating unit 107 generates a second control signal to be transmitted from the array antenna 101 by using the directional beam B0 for the relay apparatus 20. The second control signal includes a relay apparatus ID that is the identification information of the relay apparatus 20. Further, as described later, the second control signal is received by the relay apparatus 20, amplified, and then, transmitted to the radio communication terminal 30 under control of the relay apparatus 20.

The reception power information receiving unit 108 receives reception power information of the first control signal and the second control signal from the radio communication terminals 30. The reception power information indicates reception power of a signal in the radio communication terminal 30, and for example, SINR, etc. For example, as shown in FIG. 4, the reception power information receiving unit 108 receives the reception power (in the unit of dB) of the first control signal and the second control signal from the radio communication terminals 30-1 to 30-5 of FIG. 1. In addition, the reception power information receiving unit 108 may receive reception power information of a combined signal of the first control signal and the second control signal, in addition to the reception power information of the first control signal and the reception power information of the second control signal.

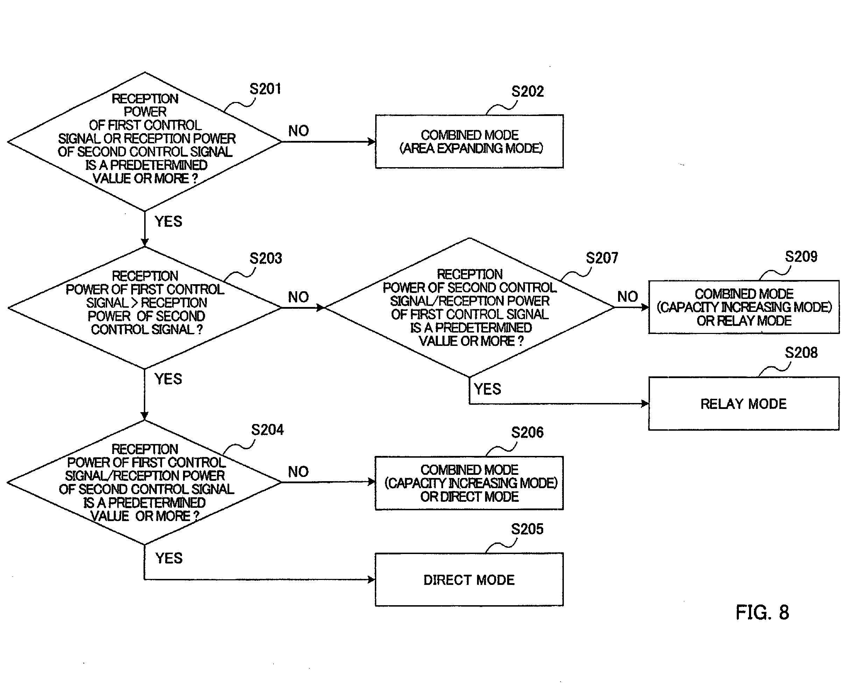

The communication mode determining unit 109 determines the direct mode, the relay mode, the capacity increasing mode or the area expanding mode as the communication mode used in communications with the radio communication terminal 30, based on the reception power information of the first control signal and the second control signal received by the reception power information receiving unit 108. In addition, the method of determining the communication mode will be described specifically later (see FIG. 8), and therefore, descriptions thereof are omitted herein.

The scheduling unit 110 allocates radio resources to the radio communication terminal 30 for which the communication mode is determined by the communication mode determining unit 109. Herein, the radio resources may be allocated for each communication mode fixedly or dynamically. In addition, the radio resources may be allocated for each communication mode in time division or in frequency division.

For example, in FIG. 5A, radio resources a for the direct mode, radio resources b for the combined mode including the capacity increasing mode and the area expanding mode, and radio resources c for the relay mode are allocated fixedly in the ratio corresponding to traffic amounts of respective communication modes. In this case, the scheduling unit 110 allocates the radio resources a for the direct mode to the radio communication terminals 30 for which the direct mode is determined, by using the scheduling algorithm such as Round robin and Proportional fair. Similarly, the scheduling unit 110 allocates the radio resources b for the combined mode and the radio resources c for the relay mode to the radio communication terminals 30 for which the combined mode or the relay mode is determined, respectively.

Meanwhile, in FIG. 5B, the radio resources a for the direct mode, radio resources b for the combined mode including the capacity increasing mode and the area expanding mode, and radio resources c for the relay mode are allocated dynamically. In this case, the scheduling unit 110 selects n radio communication terminals 30 in descending order of the indicator (instantaneous SINR/average SINR) of Proportional fair from among all the radio communication terminals 30. The scheduling unit 110 allocates the radio resources a, b and c in the ratio corresponding to the traffic amounts for each communication mode of n selected radio communication terminals 30. For example, when the ratio of the traffic amounts for each communication mode of n selected radio communication terminals 30 is 6:1:3 (direct mode: combined mode: relay mode), the radio resources a, b and c are also allocated in the ratio of 6:1:3.

The transmission signal generating unit 112 transforms the first control signal generated by the first control signal generating unit 106 into a transmission signal in a predetermined format. Further, the transmission signal generating unit 112 transforms the second control signal generated by the second control signal generating unit 107 into a transmission signal in a predetermined format, based on the weight stored in the weight storing unit 105. The transmission signal generating unit 113 transforms a downlink data signal stored in the transmission buffer 111 into a transmission signal in a predetermined format.

### (2) Functional configuration of the relay apparatus 20

As shown in FIG. 6, the relay apparatus 20 is provided with a reception unit 201, a first amplifying unit 202, a weight generating unit 203, a control signal generating unit 204, a first transmission unit 205, a relay control unit 206, a second amplifying unit 207, a relay switch 208, and a second transmission unit 209.

The reception unit 201 receives a data signal, a control signal and a training signal that are transmitted from the radio base station 10, and a data signal and a control signal that are transmitted from the radio communication terminal 30. The first amplifying unit 202 amplifies the downlink signal and uplink signal received by the reception unit 201.

The weight generating unit 203 generates an optimal weight of the directional beam B0 that is transmitted from the array antenna 101 of the radio base station 10 to the relay apparatus 20, based on a reception result of the training signal received by the reception unit 201. The control signal generating unit 204 generates a control signal including weight information indicative of the optimal weight generated by the weight generating unit 203. The first transmission unit 205 transmits the control signal including the weight information generated by the weight generating unit 203 to the radio base station 10.

The relay control unit 206 controls whether or not to relay a received signal, based on whether or not the received signal in the reception unit 201 includes the relay apparatus ID of the relay apparatus 20. When the received signal includes the relay apparatus ID of the apparatus 20, in order to relay the received signal amplified by the second amplifying unit 207, the relay control unit 206 switches the relay switch 208 ON. Meanwhile, when the received signal does not include the relay apparatus ID of the apparatus 20, in order not to relay the received signal amplified by the second amplifying unit 207, the relay control unit 206 switches the relay switch 208 OFF.

When the relay switch 208 is switched ON, the second transmission unit 209 transmits the received signal amplified by the second amplifying unit 207 to the radio communication terminal 30 or the radio base station 10.

### (Operation of the radio communication system according to Embodiment 1)

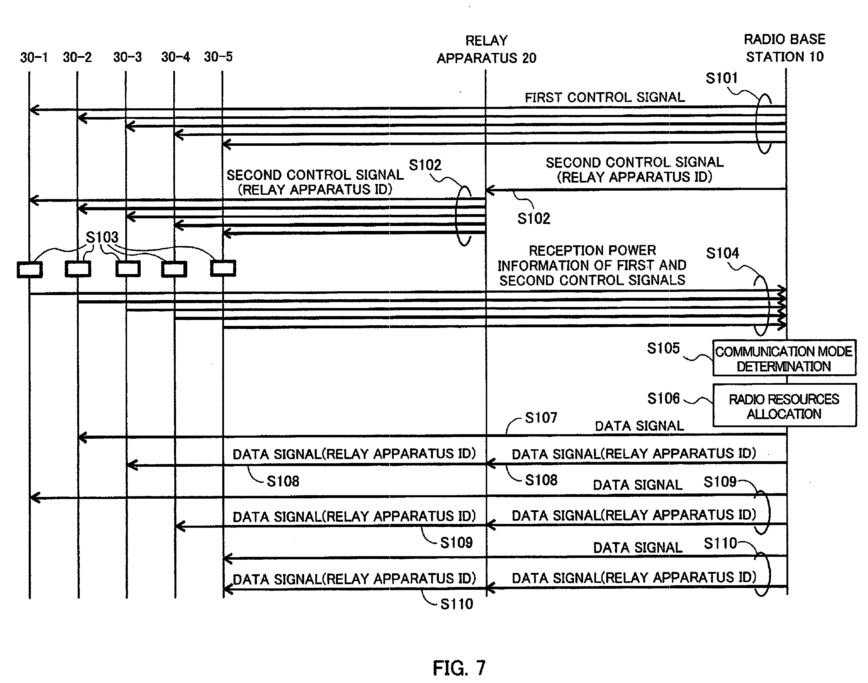

The operation of the radio communication system configured as described above will be described below with reference to FIGS. 7 to 9. FIG. 7 is a sequence diagram illustrating a radio communication method according to Embodiment 1. In addition, in the following description, as shown in FIG. 1, it is assumed that the relay apparatus 20 is provided in the cell C1 of the radio base station 10, the radio communication terminals 30-1 and 30-2 are located in the cell C1 of the radio base station 10, the radio communication terminals 30-3 and 30-4 are located in the cell C2 of the relay apparatus 20, the radio communication terminal 30-5 is located outside the cells 1 and 2, and the radio communication terminals 30-1 to 30-5 perform downlink communications.

As shown in FIG. 7, in step S101, the radio base station 10 broadcasts a first control signal by using the non-directional beam for the entire cell 1. The radio communication terminals 30-1 to 30-5 receive the first control signal broadcast from the radio base station 10. The relay apparatus 20 receives the first control signal broadcast from the radio base station 10, and since the received first control signal does not include the relay apparatus ID of the relay apparatus 20, does not relay the first control signal.

In step S102, the radio base station 10 broadcasts a second control signal including the relay apparatus ID of the relay apparatus 20 by using the directional beam B0 for the relay apparatus 20. The relay apparatus 20 receives the second control signal broadcast from the radio base station 10. Since the received second control signal includes the relay apparatus ID of the apparatus 20, the relay apparatus 20 amplifies the second control signal to broadcast. The radio communication terminals 30-1 to 30-5 receive the second control signal broadcast from the relay apparatus 20.

In step S103, the radio communication terminals 30-1 to 30-5 measure the reception power of the first control signal received in step S101, and the reception power of the second control signal received in step S102.

In step S104, the radio communication terminals 30-1 to 30-5 notify the radio base station 10 of the reception power information of the first control signal and the second control signal measured in step S103.

In step S105, based on the reception power information of the first control signal and the second control signal notified from the radio communication terminals 30-1 to 30-5, the radio base station 10 determines a communication mode used in communications with each of the radio communication terminals 30-1 to 30-5. Herein, the operation for the radio base station 10 to determine a communication mode used in communications with each radio communication terminal 30 will be described specifically with reference to FIG. 8. FIG. 8 is a flowchart illustrating the communication mode determining operation. In addition, in the following description, it is assumed that the radio base station 10 receives the reception power information as shown in FIG. 4 from the radio communication terminals 30-1 to 30-5.

As shown in FIG. 8, in step S201, based on the reception power information notified from the radio communication terminal 30, the radio base station 10 determines whether or not the reception power of the first control signal or the reception power of the second control signal in the radio communication terminal 30 is a predetermined value or more.

When the reception power of the first control signal or the reception power of the second control signal in the radio communication terminal 30 is less than the predetermined value (step S201: No), in step S202 the radio base station 10 determines a communication mode of the radio communication terminal 30 to be the "area expanding mode" included in the combined mode. For example, in the radio communication terminal 30-5 as shown in FIG. 1, both of the reception power (5 dB in FIG. 4) of the first control signal from the radio base station 10 and the reception power (6 dB in FIG. 4) of the second control signal from the relay apparatus 20 is less than the predetermined value (for example, 10 dB). Therefore, in this step, the radio base station 10 determines a communication mode of the radio communication terminal 30-5 to be the "area expanding mode",

When the reception power of the first control signal or the reception power of the second control signal in the radio communication terminal 30 is the predetermined value or more (step S201: Yes), in step S203 the radio base station 10 determines whether or not the reception power of the first control signal is higher than the reception power of the second control signal.

When the reception power of the first control signal is higher than the reception power of the second control signal in the radio communication terminal 30 (step S203: Yes), in step S204 it is determined whether or not the reception power ratio of the first control signal to the second control signal (i.e. reception power of the first control signal/reception power of the second control signal) is a predetermined value or more.

When the reception power ratio of the first control signal to the second control signal is the predetermined value or more (step S204: Yes), in step S205 the radio base station 10 determines a communication mode of the radio communication terminal 30 to be the "direct mode". For example, in the radio communication terminal 30-2 as shown in FIG. 1, the reception power (20 dB in FIG. 4) of the first control signal is higher than the reception power (2 dB in FIG. 4) of the second control signal, and the reception power ratio of the first control signal to the second control signal is a predetermined value (for example, 10) or more. Therefore, in this step, the radio base station 10 determines a communication mode of the radio communication terminal 30-2 to be the "direct mode".

When the reception power ratio of the first control signal to the second control signal is less than the predetermined value (step S204: No), in step S206 the radio base station 10 determines a communication mode of the radio communication terminal 30 to be the "capacity increasing mode" included in the combined mode. However, when there is no radio communication terminal 30 paired with the radio communication terminal 30 in the "capacity increasing mode", in other words, any other radio communication terminal 30 to proceed to step S209 described later does not exist, the radio base station 10 determines a communication mode of the radio communication terminal 30 to be the "direct mode".

For example, in the radio communication terminal 30-1 as shown in FIG. 1, the reception power (12 dB in FIG. 4) of the first control signal is higher than the reception power (8 dB in FIG. 4) of the second control signal, and the reception power ratio of the first control signal to the second control signal is less than the predetermined value (for example, 10). Further, in the case shown in FIG. 1, there exists the radio communication terminal 30-4 to be paired with the radio communication terminal 30-1 in the "capacity increasing mode". Therefore, in this step, the radio base station 10 determines a communication mode used in communications with the radio communication terminal 30-1 to be the "capacity increasing mode".

When the reception power of the second control signal is higher than the reception power of the first control signal in the radio communication terminal 30 (step S203: No), in step S207 it is determined whether or not the reception power ratio of the second control signal to the first control signal (i.e. reception power of the second control signal/reception power of the first control signal) is a predetermined value or more.

When the reception power ratio of the second control signal to the first control signal is the predetermined value or more (step S207: Yes), in step S208 the radio base station 10 determines a communication mode of the radio communication terminal 30 to be the "relay mode". For example, in the radio communication terminal 30-3 as shown in FIG. 1, the reception power (20 dB in FIG. 4) of the second control signal is higher than the reception power (2 dB in FIG. 4) of the first control signal, and the reception power ratio of the second control signal to the first control signal is a predetermined value (for example, 10) or more. Therefore, in this step, the radio base station 10 determines a communication mode of the radio communication terminal 30-3 to be the "relay mode".

When the reception power ratio of the second control signal to the first control signal is less than the predetermined value (step S207: No), in step S209 the radio base station 10 determines a communication mode of the radio communication terminal 30 to be the "capacity increasing mode". However, when there is no radio communication terminal 30 paired with the radio communication terminal 30 in the "capacity increasing mode", in other words, any other radio communication terminal 30 to proceed to step S206 described above does not exist, the radio base station 10 determines a communication mode of the radio communication terminal 30 to be the "relay mode".

For example, in the radio communication terminal 30-4 as shown in FIG. 1, the reception power (20 dB in FIG. 4) of the second control signal is higher than the reception power (10 dB in FIG. 4) of the first control signal, and the reception power ratio of the first control signal to the second control signal is less than the predetermined value (for example, 10). Further, in the case shown in FIG. 1, there exists the radio communication terminal 30-1 to be paired with the radio communication terminal 30-4 in the "capacity increasing mode". Therefore, in this step, the radio base station 10 determines a communication mode used in communications with the radio communication terminal 30-4 to be the "capacity increasing mode".

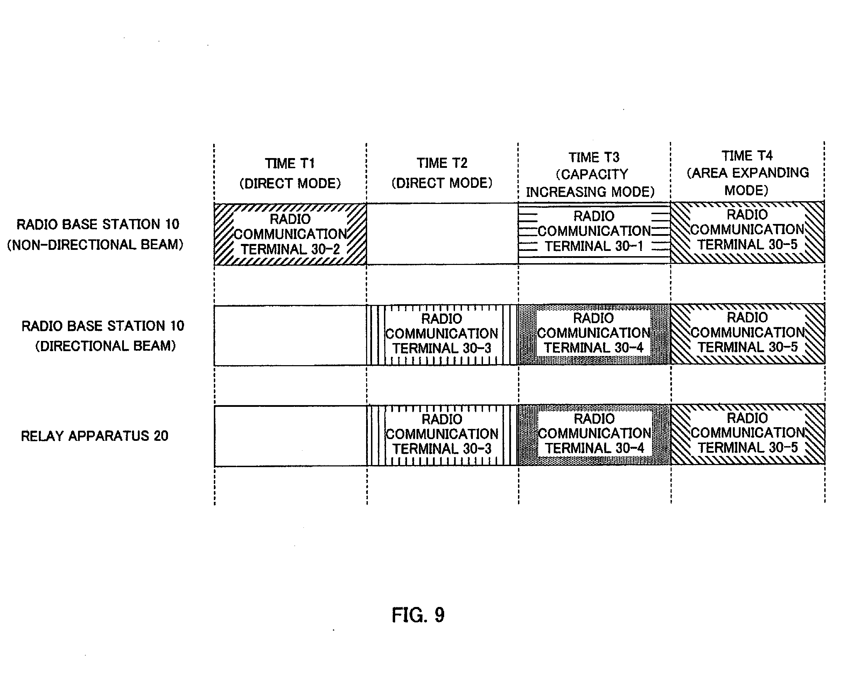

As described above, in step S105 in FIG. 7, the radio base station 10 determines communication modes used in communications with the radio communication terminals 30-1 to 30-5. In step S106, the radio base station 10 allocates radio resources to the radio communication terminals 30-1 to 30-5 for which the communication modes are determined in step S105. FIG. 9 is a diagram showing an example of radio resources allocation to the radio communication terminals 30 for which the communication modes are determined. In addition, FIG. 9 shows an example of allocating radio resources to the radio communication terminals of respective communication modes in time division, but radio resources may be allocated in frequency division.

As shown in FIG. 9, the radio base station 10 allocates time T1 to the radio communication terminal 30-2 for which the "direct mode" is determined. Further, the radio base station 10 allocates time T2 to the radio communication terminal 30-3 for which the "relay mode" is determined. Furthermore, the radio base station 10 allocates the same time T3 to a plurality of radio communication terminals, 30-1 and 30-4, for which the "capacity increasing mode" is determined. Still furthermore, the radio base station 10 allocates time T4 to the radio communication terminal 30-5 for which the "area expanding mode" is determined.

In steps S107 to S110, the radio base station 10 communicates with the radio communication terminals 30-1 to 30-5 by using the radio resources allocated in step S106. In addition, FIG. 7 shows the sequence only in downlink communications.

In step S107, as shown in FIG. 2A, the radio base station 10 transmits a data signal for the radio communication terminal 30-2 of the "direct mode" using the radio resources (time T1 in FIG. 9) allocated in step S106 by the non-directional beam for the entire cell C1. In addition, the radio base station 10 does not include the relay apparatus ID of the relay apparatus 20 in the data signal.

In step S108, as shown in FIG. 2B, the radio base station 10 transmits a data signal for the radio communication terminal 30-3 of the "relay mode" using the radio resources (time T2 in FIG. 9) allocated in step S106 by the directional beam B0 for the relay apparatus 20. In addition, since the radio base station 10 includes the relay apparatus ID of the relay apparatus 20 in the data signal, the relay apparatus 20 amplifies the data signal received from the radio base station 10 to perform secondary transmission.

In step S109, as shown in FIG 2C, the radio base station 10 transmits data signals for the radio communication terminals 30-1 and 30-4 of the "capacity increasing mode" using the radio resources (time T3 in FIG. 9) allocated in step S106. More specifically, the radio base station 10 transmits the data signal for the radio communication terminal 30-1 by the non-directional beam for the entire cell C1, while further transmitting the data signal for the radio communication terminal 30-4 by the directional beam B0 for the relay apparatus 20. In addition, the radio base station 10 does not include the relay apparatus ID of the relay apparatus 20 in the data signal for the radio communication terminal 30-1, while including the relay apparatus ID of the relay apparatus 20 in the data signal for the radio communication terminal 30-4. Therefore, the relay apparatus 20 amplifies only the data signal for the radio communication terminal 30-4 to perform secondary transmission.

In step S110, as shown in FIG. 2D, the radio base station 10 transmits data signals for the radio communication terminal 30-5 of the "area expanding mode" using the radio resources (time T4 in FIG. 9) allocated in step S106 by the non-directional beam for the entire cell C1 and the directional beam B0 for the relay apparatus 20. In addition, the radio base station 10 does not include the relay apparatus ID of the relay apparatus 20 in one data signal, while including the relay apparatus ID in the other data signal. Therefore, the relay apparatus 20 amplifies only the other data signal including the relay apparatus ID of the apparatus 20 to perform secondary transmission.

### (Action and Effect)

According to the radio communication system according to Embodiment 1, in the relay mode, by using the directional beam between the radio base station 10 and the relay apparatus 20, it is possible to reduce interference to other relay apparatuses 20 and other radio communication terminals 30. As a result, it is possible to use a combined mode in which the direct mode and the relay mode are combined as a communication mode of the radio communication terminal 30, and radio resources can be used effectively.

Further, according to the radio communication system according to Embodiment 1, the relay apparatus 20 is capable of determining whether or not to relay a received signal only by determining whether or not the received signal includes the relay apparatus ID of the apparatus 20. Therefore, in the case where any radio communication terminal 30 does not exist under control of the relay apparatus 20, and the like, it is possible to prevent the relay apparatus 20 from relaying a received signal unnecessarily, and as a result, it is possible to reduce interference to radio communication terminals in other cells and the radio communication terminal 30 of the direct mode.

Thus, according to the radio communication system according to Embodiment 1, in the radio communication system for expanding coverage of the radio base station 10 by relay transmission using the relay apparatus 20, by using radio resources effectively, it is possible to improve throughput in the enter radio communication system.

In Embodiments 2 to 7 below, variations will be described specifically when the radio base station 10 communicates with the radio communication terminal 30 via the relay apparatus 20 by the above-mentioned relay mode. In addition, the following variations are applicable to the radio communication terminal 30 that communicates by the relay mode in the combined mode (capacity increasing mode and area expanding mode) in which the relay mode and the direct mode are combined.

### [Embodiment 2]

Embodiment 1 describes the case where the radio base station 10 communicates with at least one radio communication terminal 30 via a relay apparatus 20 by the relay mode. Embodiment 2 describes the case where the radio base station 10 communicates with a plurality of radio communication terminals 30 via different relay apparatuses 20 by the relay mode, while focusing on the difference from Embodiment 1.

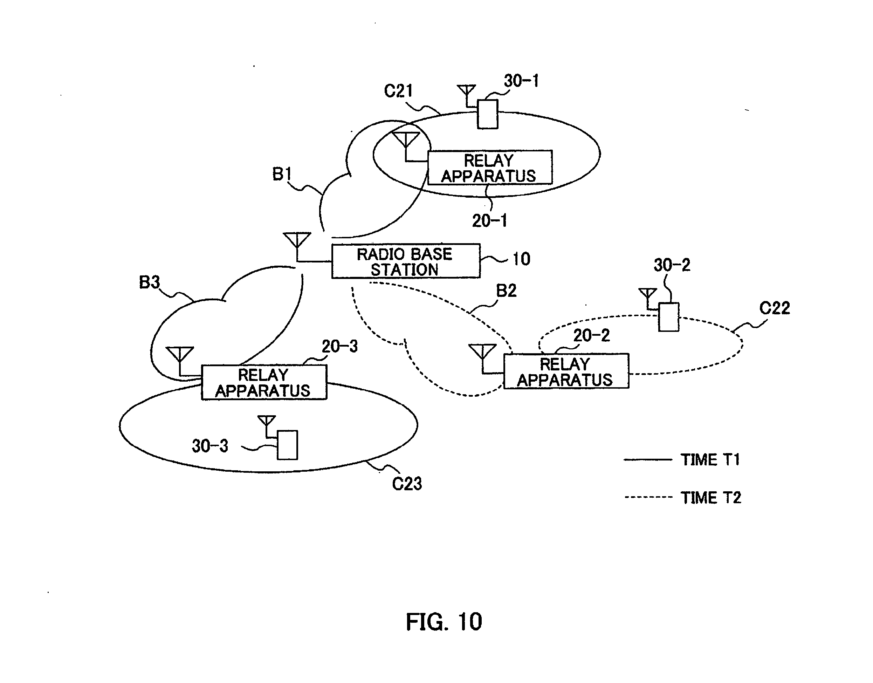

FIG. 10 is a schematic diagram of a radio communication system according to Embodiment 2. In the radio communication system according to Embodiment 2, as shown in FIG. 10, a plurality of relay apparatuses 20-1 to 20-3 are provided in the cell (not shown in the figure) of the radio base station 10, and radio communication terminals 30-1 to 30-3 are located in cells C21 to C23 of the plurality of relay apparatuses 20-1 to 20-3 respectively.

In the radio communication system as shown in FIG. 10, the radio base station 10 communicates with the plurality of radio communication terminals 30-1 to 30-3 via different relay apparatuses 20-1 to 20-3 by the relay mode. In the communications are used directional beams B1 to B3 transmitted between the radio base station 10 and the relay apparatuses 20-1 to 20-3 respectively. In this case, when the same radio resources (for example, predetermined time and predetermined frequency) are allocated to the radio communication terminals 30-1 to 30-3, interference among the directional beams B1 to B3 causes deterioration of communication quality between the radio communication terminals 30-1 to 30-3 and the radio base station 10.

Therefore, the scheduling unit 110 of the radio base station 10 performs inter-cell interference control for allocating the same radio resources (for example, predetermined time and predetermined frequency) to radio communication terminals 30 that are selected as described later, so that the communication quality between each of the radio communication terminals 30-1 to 30-3 and the radio base station 10 meets a predetermined value.

For example, the scheduling unit 110 may randomly select the predetermined number of radio communication terminals 30 from among a plurality of radio communication terminals 30 that performs communications via different relay apparatuses 20, and allocate the same radio resources to the selected plurality of radio communication terminals 30.

Further, the scheduling unit 110 may sequentially select radio communication terminals 30 to allocate the same radio resources from among a plurality of radio communication terminals 30 that performs communications via different relay apparatuses 20. More specifically, the scheduling unit 110 selects one radio communication terminal 30 from the plurality of radio communication terminals 30 to allocate the radio resources. Then, the scheduling unit 110 selects another radio communication terminal 30 from the plurality of radio communication terminals 30 to allocate the radio resources. When the communication quality of both of the selected two radio communication terminals 30 meets a predetermined value, the scheduling unit 110 allocates the same radio resources to both of the selected radio communication terminals 30. Meanwhile, when the communication quality of both of the selected radio communication terminals does not meet the predetermined value, the scheduling unit 110 does not allocate the radio resources to another radio communication terminal 30. The scheduling unit 110 repeats the above-mentioned operation.

In FIG. 10, the scheduling unit 110 allocates time T1 to the radio communication terminals 30-1 and 30-3 which are selected from the plurality of radio communication terminals 30-1 to 30-3 as described above, while allocating time T2 to the radio communication terminal 30-2.

Thus, according to the radio communication system according to Embodiment 2, radio communication terminals 30 to allocate the same radio resources are selected from among a plurality of radio communication terminals 30-1 to 30-3 that communicate with the radio base station 10 via different relay apparatuses 20, and it is thereby possible to prevent interference among the directional beams B1 to B3 used in the communications. Further, as long as the communication quality meets a predetermined value, it is possible to use the same radio resources for a plurality of radio communication terminals 30 of the relay mode, and it is possible to increase throughput in the entire radio communication system.

### [Embodiment 3]

Embodiment 3 describes a radio communication system including a plurality of adjacent radio base stations 10 each forming a cell in which the relay apparatus 20 is provided, while focusing on the differences from the above-mentioned Embodiments.

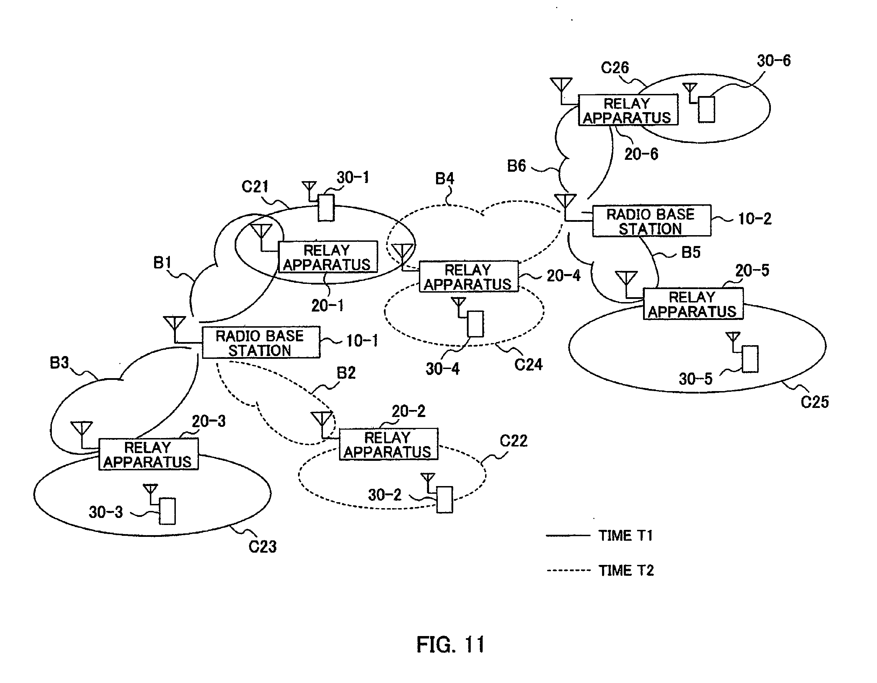

FIG. 11 is a schematic diagram of a radio communication system according to Embodiment 3 of the invention. As shown in FIG. 11, in the radio communication system according to Embodiment 3, a plurality of relay apparatuses 20-1 to 20-3 are provided in a cell (not shown in the figure) of a radio base station 10-1, and radio communication terminals 30-1 to 30-3 are located in cells C21 to C23 of the plurality of relay apparatuses 20-1 to 20-3 respectively. Similarly, a plurality of relay apparatuses 20-4 to 20-6 are provided in a cell (not shown in the figure) of a radio base station 10-2 adjacent to the radio base station 10-1, and radio communication terminals 30-4 to 30-6 are located in cells C24 to C26 of the plurality of relay apparatuses 20-4 to 20-6 respectively.

In the radio communication system as shown in FIG. 11, the radio base station 10-1 communicates with the radio communication terminals 30-1 to 30-3 via different relay apparatuses 20-1 to 20-3 by the relay mode respectively. In the communications are used directional beams B1 to B3 transmitted between the radio base station 10 and the relay apparatuses 20-1 to 20-3 respectively. Similarly, the radio base station 10-2 communicates with the radio communication terminals 30-4 to 30-6 via different relay apparatuses 20-4 to 20-6 by the relay mode respectively. In the communications are used directional beams B4 to B6 transmitted between the radio base station 10 and the relay apparatuses 20-4 to 20-6 respectively.

In the case as shown in FIG. 11, inter-cell interference occurs in adjacent areas in the cells (not shown in the figure) of the radio base stations 10-1 and 10-2. To reduce the inter-cell interference, the scheduling units 110 of the adjacent radio base stations 10-1 and 10-2 coordinate the communication modes of radio communication terminals 30 to which the same radio resources are allocated in the adjacent radio base stations 10-1 and 10-2.

Herein, in the radio communication system according to Embodiment 3, the adjacent radio base stations 10-1 and 10-2 are controlled in advance, so that the allocation ratio and allocated radio resources are the same among the radio resources a for the direct mode, radio resources b for the combined mode including the capacity increasing mode and the area expanding mode, and the radio resources c for the relay mode.

Accordingly, the scheduling units 110 of the adjacent radio base stations 10-1 to 10-2 assign the radio communication terminals 30 of the same communication mode to the same radio resources. In other words, the radio resources allocated to a radio communication terminal 30 of the "relay mode" by the scheduling unit 110 of the radio base station 10-1 are also allocated to another radio communication terminal 30 of the "relay mode" by the scheduling unit 110 of the radio base station 10-2, and are not allocated to any radio communication terminal 30 of the other communication mode.

Thus, between the adjacent radio base stations 10-1 and 10-2, the communication modes of the radio communication terminals 30 to which the same radio resources are allocated are coordinated, and it is thereby possible to reduce inter-cell interference between the adjacent radio base stations 10-1 and 10-2.

Meanwhile, in order to further reduce inter-cell interference, the scheduling units 110 of the adjacent radio base stations 10-1 and 10-2 may allocate different radio resources to a plurality of radio communication terminals 30 located in the adjacent areas of the cells (not shown in the figure) of the radio base stations 10-1 and 10-2. Such radio resources allocation will specifically be described with reference to FIG. 11.

In the case as shown in FIG. 11, when the same radio resources are allocated to radio communication terminals 30-1 and 30-4 located in the adjacent areas of the cells of the radio base stations 10-1 and 10-2, interference between signals that are transmitted and received among the radio base station 10-1, relay apparatus 20-1 and radio communication terminal 30-1, and signals that are transmitted and received among the radio base station 10-2, relay apparatus 20-2 and radio communication terminal 30-4 causes deterioration of the communication quality of both signals.

Therefore, the scheduling units 110 of the radio base stations 10-1 and 10-2 allocate respective different radio resources to a plurality of radio communication terminals, 30-1 and 30-4, positioned in the adjacent areas. For example, in FIG. 11, the scheduling unit 110 of the radio base station 10-1 allocates time T1 to the radio communication terminal 30-1. Meanwhile, the scheduling unit 110 of the radio base station 10-2 allocates time T2 to the radio communication terminal 30-4.

Moreover, the scheduling units 110 of the radio base stations 10-1 and 10-2 may further perform inter-cell interference control described in Embodiment 2. For example, in FIG. 11, in order to prevent inter-cell interference with the directional beam B1 transmitted in time T1, the scheduling unit 110 of the radio base station 10-1 allocates time T2 to the radio communication terminal 30-2 communicating by using the directional beam B2. Meanwhile, the scheduling unit 110 of the radio base station 10-1 allocates the same time T1 as in the radio communication terminal 30-1 to the radio communication terminal 30-3 communicating by using the directional beam B3 which has a few effects on the directional beam B1. Similarly, in order to prevent inter-cell interference with the directional beam B4 transmitted in time T2, the scheduling unit 110 of the radio base station 10-2 allocates time T1 to the radio communication terminals 30-5 and 30-6 communicating by using directional beams B5 and B6.

Thus, according to the radio communication system according to Embodiment 3, the communication modes of radio communication terminals 30 to which the same resources are allocated are coordinated in between the adjacent base stations 10-1 and 10-2, while respective different radio resources are allocated to a plurality of radio communication terminals 30 located in the adjacent areas of the cells of a plurality of radio base stations 10, and it is thereby possible to prevent inter-cell interference in the adjacent radio base stations 10. Further, as long as inter-cell interference meets a predetermined value, it is possible to share the same radio resources among a plurality of adjacent radio base stations 10, and throughput can thereby be improved.

### [Embodiment 4]

Embodiment 4 describes the case where the radio base station 10 communicates with one radio communication terminal 30 for communicating by the relay mode via different relay apparatuses 20, while focusing on the difference.

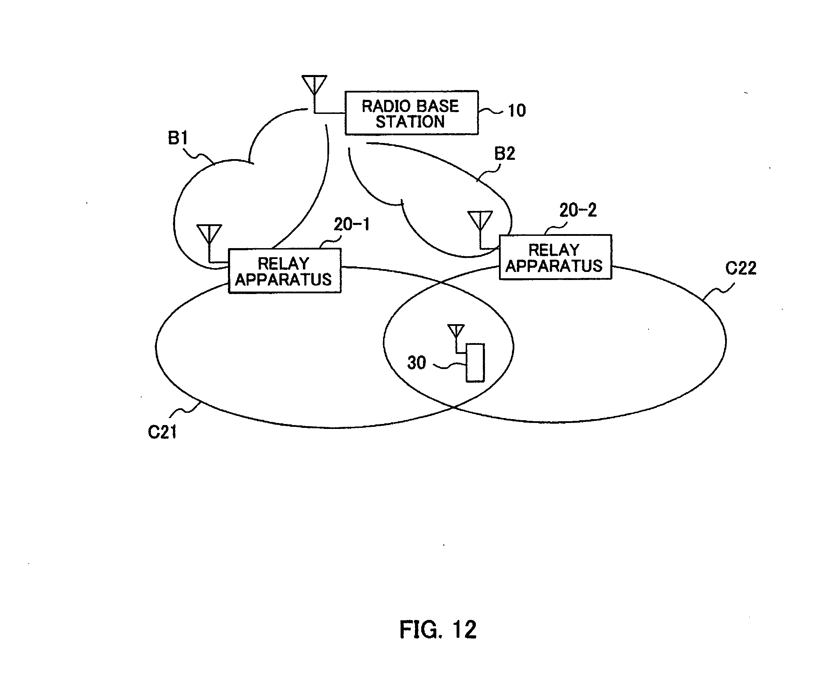

FIG. 12 is a schematic diagram of a radio communication system according to Embodiment 4 of the invention. In the radio communication system according to Embodiment 4, as shown in FIG. 12, a plurality of relay apparatuses 20-1 and 20-2 are provided in the cell of the radio base station 10. The relay apparatuses 20-1 and 20-2 respectively form cells C21 and C22, and a radio communication terminal 30 is located in an adjacent area of the cells C21 and C22.

In the radio communication system as shown in FIG. 12, the radio base station 10 communicates with the radio communication terminal 30 via different relay apparatuses 20-1 and 20-2 by the relay mode. In the communications are used directional beams B1 and B2 transmitted between the radio base station 10 and the relay apparatuses 20-1 and 20-2 respectively.

In the case as shown in FIG. 12, the radio base station 10 communicates with the radio communication terminal 30 via the relay apparatuses 20-1 and 20-2 by the relay mode based on notification from the radio communication terminal 30 (i.e. notification indicating that the radio communication terminal 30 is capable of communicating via the relay apparatuses 20-1 and 20-2). Further, the radio communication terminal 30 receives a second control signal including the relay apparatus ID of the relay apparatus 20-1 from the relay apparatus 20-1, while further receiving a second control signal including the relay apparatus ID of the relay apparatus 20-2 from the relay apparatus 20-2. Based on the reception power of two second control signals received from the relay apparatuses 20-1 and 20-2, the radio communication terminal 30 determines whether or not to be able to communicate via the relay apparatuses 20-1 and 20-2.

Thus, according to the radio communication system according to Embodiment 4, the radio base station 10 is capable of communicating with one radio communication terminal 30 via different relay apparatuses 20 by the relay mode, and it is thereby possible to further expand coverage of the radio base station 10.

### [Embodiment 5]

Embodiment 5 describes the case where a plurality of radio base stations 10 communicate with one radio communication terminal 30 for communicating by the relay mode via one relay apparatus 20, while focusing on the difference.

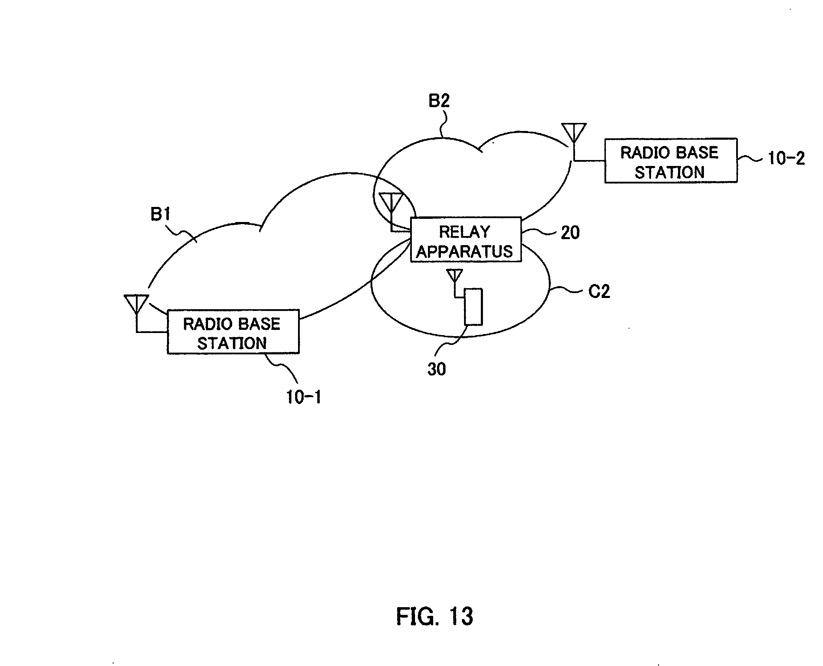

FIG. 13 is a schematic diagram of a radio communication system according to Embodiment 5 of the invention. In the radio communication system according to Embodiment 5, as shown in FIG. 13, a relay apparatus 20 is provided in an adjacent area of cells (not shown in the figure) of radio base stations 10-1 and 10-2, and a radio communication terminal 30 is located in the cell C2 of the relay apparatus 20.

In the radio communication system as shown in FIG. 13, each of the radio base stations 10-1 and 10-2 communicates with the radio communication terminal 30 via one relay apparatus 20 by the relay mode. In the communications are used directional beams B1 and B2 transmitted between the radio base stations 10-1 and 10-2 and the relay apparatus 20 respectively.

In the case as shown in F1G. 13, the relay apparatus 20 notifies surrounding radio base stations 10-1 and 10-2 that communications can be performed via the relay apparatus 20. In response to the notification from the relay apparatus 20, each of the radio base stations 10-1 and 10-2 communicates with the radio communication terminal 30 via the relay apparatus 20.

Thus, according to the radio communication system according to Embodiment 5, a plurality of adjacent radio base stations 10 communicates with one radio communication terminal 30 via one relay apparatus 20 by the relay mode, and it is thereby possible to further expand coverage of the radio base station 10.

### [Embodiment 6]

Embodiment 1 describes the radio communication system in which the relay apparatus 20 relays a received signal by using the same frequency as that of the received signal in the case where the radio base station 10 communicates with the radio communication terminal 30 via the relay apparatus 20 by the relay mode. Embodiment 6 describes a radio communication system in which the relay apparatus 20 relays a received signal by using the same or different frequency as/from that of the received signal in the same case.

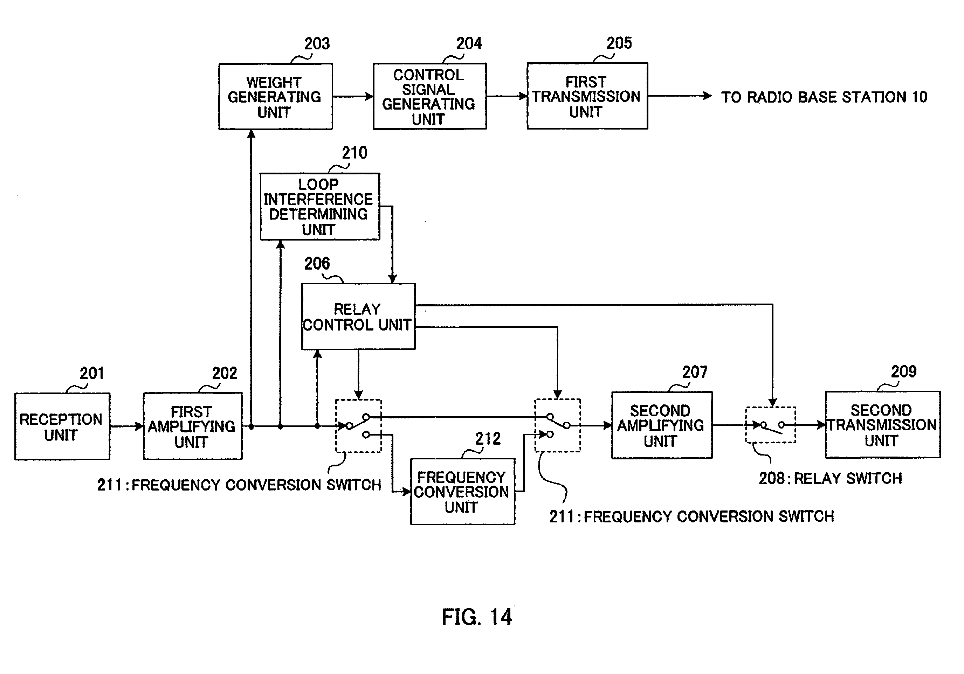

FIG. 14 is a functional block diagram of the relay apparatus 20 of the radio communication system according to Embodiment 6. As shown in FIG. 14, in addition to the configuration of Embodiment 1, the relay apparatus 20 is provided with a loop interference determining unit 210, frequency conversion switch 211, and frequency conversion unit 212.

The loop interference determining unit 210 determines whether or not the reception power of a loop interfering signal is a predetermined value or more with respect to a received signal from the radio base station 10 or radio communication terminal 30. When the loop interference determining unit 210 determines that the reception power of the loop interfering signal is the predetermined value or more, the section 210 notifies the relay control unit 206 that the received signal needs frequency conversion. Meanwhile, when the loop interference determining unit 210 determines that the reception power of the loop interfering signal is less than the predetermined value, the section 210 notifies the relay control unit 206 that the received signal does not need frequency conversion.

In accordance with notification from the loop interference determining unit 210, the relay control unit 206 controls the frequency conversion switch 211. When the relay control unit 206 is notified that the received signal needs frequency conversion, the section 206 switches the frequency conversion switch 211 ON. Meanwhile, when the relay control unit 206 is notified that the received signal does not need frequency conversion, the section 206 switches the frequency conversion switch 211 OFF. In addition, in FIG. 14, the frequency conversion switch 211 is OFF.

The frequency conversion unit 212 converts the frequency of the received signal amplified in the first amplifying unit 202 into a different frequency.

Thus, according to the radio communication system according to Embodiment 6, since the relay apparatus 20 relays a received signal by using the same or different frequency as/from that of the received signal, it is possible to prevent the communication quality of a received signal from the radio base station 10 or radio communication terminal 30 from deteriorating, due to a loop interfering signal caused by the case where a transmission signal amplified in the relay apparatus 20 loops into the reception unit 201 of the relay apparatus 20.

### [Embodiment 7]

Embodiment 7 describes a radio communication system in which the radio base station 10 performs transmission power control to improve communication quality of communications when the radio base station 10 communicates with the radio communication terminal 30 by the relay mode.

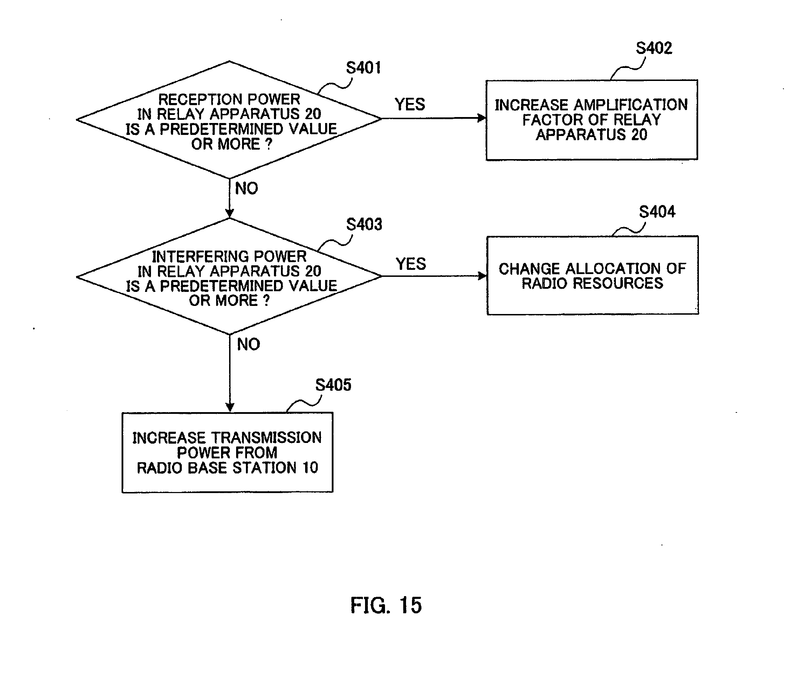

FIG. 15 is a flowchart illustrating transmission power control that the radio base station 10 performs when the radio base station 10 of the radio communication system according to Embodiment 7 performs downlink communications with the radio communication terminal 30 by the relay mode (see FIG. 10). In FIG. 15, it is assumed that the radio base station 10 receives an increasing request of the transmission power from the radio communication terminal 30 that performs downlink communications by the relay mode.

In step S401, the radio base station 10 determines whether or not the reception power of a downlink signal in the relay apparatus 20 is a predetermined value or more.

When the reception power of the downlink signal in the relay apparatus 20 is the predetermine value or more (step S401; Yes), in step S402 the radio base station 10 determines that propagation conditions between the station 10 and the relay apparatus 20 are good, and that propagation conditions between the relay apparatus 20 and the radio communication terminal 30 deteriorate, and instructs the relay apparatus 20 to increase the amplification factor.

Meanwhile, when the reception power of the downlink signal in the relay apparatus 20 is less than the predetermine value (step S401; No), in step S403 the radio base station 10 determines whether or not the interfering power in the relay apparatus 20 is a predetermined value or more.

When the interfering power in the relay apparatus 20 is the predetermined value or more (step S403; Yes), in step S404 the radio base station 10 determines that interference with a directional beam for another relay apparatus 20 occurs, and changes radio resources to allocate to the downlink signal into other radio resources (for example, another time and another frequency) as described in Embodiment 2. Meanwhile, when the interfering power in the relay apparatus 20 is less than the predetermined value (step S403; No), in step S405 the radio base station 10 determines that it is not necessary to change the radio resources unlike step S404, and increases the transmission power of the directional beam for the relay apparatus 20.

In addition, not shown in the figure, when the radio base station 10 performs uplink communications with the radio communication terminal 30 by the relay mode, the radio communication terminal 30 performs transmission power control performed by the radio base station 10 as shown in FIG. 15. In this case, it is assumed that the radio communication terminal 30 receives an increasing request of the transmission power from the radio base station 10 that performs uplink communications by the relay mode.

Thus, in the radio communication system according to Embodiment 7, the amplification factor in the relay apparatus 20 and the transmission power from the radio base station 10 or radio communication terminal 30 is controlled, and it is thereby possible to improve the communication quality between the radio base station 10 and the radio communication terminal 30 by the relay mode.

### [Other Embodiments]

In the above-mentioned Embodiments, as a method of forming an optimal weight of the directional beam, described is the method (feedback using method) in which the relay apparatus 20 generates an optimal weight based on a training signal from the radio base station 10, and notifies the radio base station 10 of the generated optimal weight. However, the radio base station 10 may use the same frequency channel sounding method in which the radio base station 10 generates an optimal weight based on a channel sounding signal from the relay apparatus 20.

## Claims

1. A radio communication system including a radio base station (10) for communicating with at least one radio communication terminal and a relay apparatus (20) provided in a cell formed by the radio base station (10), wherein
the radio base station (10) comprises:
an acquiring unit (108) configured to acquire, from each radio communication terminal, reception power information of a first control signal received from the radio base station (10) by the respective radio communication terminal (30) and reception power information of a second control signal received from the relay apparatus (20) by the respective radio communication terminal; and **characterized in that** the radio base station further comprises
a communication mode determining unit (109) configured to determine a communication mode for each radio communication terminal (30) from among a direct mode for communicating without via the relay apparatus (20), a relay mode for communicating via the relay apparatus (20) by using a directional beam transmitted between the radio base station (10) and the relay apparatus (20), and a combined mode for communicating by combining the direct mode and the relay mode, based on the reception power information acquired from the respective radio communication terminal (30); and
a communication unit (113) configured to communicate with each radio communication terminal by using the communication mode determined for the respective radio communication terminal, and
the relay apparatus (20) is of an Amplify-and-Forward, AF, type and comprises a relay control unit (206) configured to control whether or not to relay a received signal from the radio base station (10), based on whether or not the received signal includes identification information of the relay apparatus (20), wherein
a data signal transmitted from the radio base station (10) to a radio communication terminal (30) for which the relay mode is determined by the communication mode determining unit (109) includes the identification information of the relay apparatus (20), while data signal transmitted form the radio base station (10) to a radio communication terminal (30) for which the direct mode is determined by the communication mode determining unit does not include the identification information of the relay apparatus (20).

2. The radio communication system according to claim 1, wherein the combined mode includes a capacity increasing mode for communicating with a radio communication terminal (30) by the direct mode, while communicating with another radio communication terminal (30) by the relay mode, by using a same radio resource.

3. The radio communication system according to claim 1, wherein the combined mode includes an area expanding mode for communicating with a radio communication terminal (30) by both the direct mode and the relay mode by using a same radio resource.

4. The radio communication system according to claim 1, wherein the radio base station further comprises
an allocation unit (110) configured to allocate a radio resource to the each radio communication terminal (30) according to the communication mode determined for the respective radio communication terminal (30).

5. The radio communication system according to claim 4, wherein when the communication unit (113) is configured to communicate with a plurality of radio communication terminals (30) via different relay apparatuses (20) by the relay mode, the allocation unit (110) is configured to allocate the same radio resource to at least one radio communication terminal (30) selected from the plurality of radio communication terminals (30) so that communication quality of each of the plurality of radio communication terminals (30) meets a predetermined value.

6. The radio communication system according to claim 4, wherein the allocation unit (110) is configured to coordinate communication modes for radio communication terminals (30) to which the same radio resource is allocated between the radio base station (10-1) and an adjacent radio base station (10-2).

7. The radio communication system according to claim 1, wherein the communication unit (113) is configured to communicate with a radio communication terminal (30) for communicating by the relay mode, via a plurality of relay apparatuses (20).

8. The radio communication system according to claim 1, wherein the communication unit (113) is configured to communicate with a radio communication terminal (30) for communicating by the relay mode, via a relay apparatus (20) for transmitting and receiving same signal as that of the radio base station (10-1) to/from another radio base station (10-2).

9. The radio communication system according to any one of claims 1 to 8, wherein the relay apparatus (20) further comprises:
a loop interfering signal determining unit (210) configured to determine whether or not reception power of a loop interfering signal in the received signal is a predetermined value or more; and
a frequency conversion unit (211) configured to convert a frequency of the received signal into another frequency when the reception power of the loop interfering signal in the received signal is the predetermined value or more.

10. A radio communication method in a radio communication system including a radio base station (10) and at least one relay apparatus (20) having assigned identification information provided in a cell formed by the radio base station (10) for communicating with at least one radio communication terminal, comprising:
in the radio base station (10), acquiring, from each radio communication terminal (30), reception power information of a first control signal received from the radio base station (10) by the respective radio communication terminal (30) and reception power information of a second control signal received from the relay apparatus (20) by the respective radio communication terminal (30); **characterized in that**
in the radio base station (10), determining a communication mode for each radio communication terminal (30) from among a direct mode for communicating without via the relay apparatus (20), a relay mode for communicating via the relay apparatus (20) by using a directional beam transmitted between the radio base station (10) and the relay apparatus (20), and a combined mode for communicating by combining the direct mode and the relay mode, based on the reception power information acquired from the respective radio communication terminal (30);
in the radio base station (10), communicating with each radio communication terminal (30) by using the communication mode determined for the respective radio communication terminal (30); and
in the relay apparatus (20) of an Amplify-and-Forward (AF) type, controlling whether or not to relay a received signal from the radio base station (10), based on whether or not the received signal includes identification information of the relay apparatus (20); wherein
a data signal transmitted from the radio base station (10) to a radio communication terminal (30) for which the relay mode is determined by the communication mode determining unit (109) includes the identification information of the relay apparatus (20), while data signal transmitted form the radio base station (10) to a radio communication terminal (30) for which the direct mode is determined by the communication mode determining unit does not include the identification information of the relay apparatus (20).

## Patentansprüche

1. Ein Funk-Kommunikationssystem enthaltend eine Funk-Basisstation (10) zum Kommunizieren mit zumindest einem Funk-Kommunikationsendgerät und ein Relais-Gerät (20) befindlich in einer von der Funk-Basisstation (10) gebildeten Zelle, wobei die Funk-Basisstation (10) aufweist:
eine Akquirierungseinheit (108), die dazu eingerichtet ist, von jedem Funk-Kommunikationsendgerät eine Empfangsleistungsinformation eines ersten Steuersignals, empfangen durch das jeweilige Funk-Kommunikationsendgerät (30) von der Funk-Basisstation (10), und eine Empfangsleistungsinformation eines zweiten Steuersignals, empfangen durch das jeweilige Funk-Kommunikationsendgerät von dem Relais-Gerät (20), zu akquirieren; und **dadurch gekennzeichnet, dass** die Funk-Basisstation weiter aufweist
eine Kommunikationsmodus-Ermittlungseinheit (109), die dazu eingerichtet ist, für jedes Funk-Kommunikationsendgerät (30) einen Kommunikationsmodus zu ermitteln aus einem direkten Modus zum Kommunizieren nicht über das Relais-Gerät (20), einem Relais-Modus zum Kommunizieren über das Relais-Gerät (20) durch Verwendung eines gerichteten Strahls übertragen zwischen der Funk-Basisstation (10) und dem Relais-Gerät (20), und einem kombinierten Modus zum Kommunizieren durch das Kombinieren des direkten Modus und des Relais-Modus, basierend auf den Empfangsleistungsinformationen akquiriert von dem jeweiligen Funk-Kommunikationsendgerät (30); und
eine Kommunikationseinheit (113), die dazu eingerichtet ist, mit jedem Funk-Kommunikationsendgerät unter Verwendung des für das jeweilige Funk-Kommunikationsendgerät ermittelten Kommunikationsmodus zu kommunizieren, und
das Relais-Gerät (20) ist von einem "Verstärken-und-Weiterleiten"-Typ ("Amplify-and-Forward", AF) und enthält eine Relais-Steuereinheit (206), die dazu eingerichtet ist, zu steuern ob oder ob nicht ein von der Funk-Basisstation (10) empfangenes Signal weitergeleitet wird, basierend darauf ob oder ob nicht das empfangene Signal eine Identifizierungsinformation des Relais-Geräts (20) enthält, wobei
ein Datensignal, übertragen von der Funk-Basisstation (10) an ein Funk-Kommunikationsendgerät (30), für das von der Kommunikationsmodus-Ermittlungseinheit (109) der Relais-Modus ermittelt wurde, die Identifizierungsinformation des Relais-Geräts (20) enthält, während ein Datensignal, übertragen von der Funk-Basisstation (10) an ein Funk-Kommunikationsendgerät (30), für das von der Kommunikationsmodus-Ermittlungseinheit der direkte Modus ermittelt wurde, die Identifizierungsinformation des Relais-Geräts (20) nicht enthält.

2. Das Funk-Kommunikationssystem gemäß Anspruch 1, wobei der kombinierte Modus einen Kapazitäts-Erhöhungs-Modus enthält zum Kommunizieren mit einem Funk-Kommunikationsendgerät (30) mittels des direkten Modus und gleichzeitigem Kommunizieren mit einem anderen Funk-Kommunikationsendgerät (30) mittels des Relais-Modus unter Verwendung derselben Funkressource.

3. Das Funk-Kommunikationssystem gemäß Anspruch 1, wobei der kombinierte Modus einen Gebiets-Erweiterungs-Modus enthält zum Kommunizieren mit einem Funk-Kommunikationsendgerät (30) mittels sowohl des direkten Modus als auch des Relais-Modus unter Verwendung derselben Funkressource.

4. Das Funk-Kommunikationssystem gemäß Anspruch 1, wobei die Funk-Basisstation weiter aufweist
eine Zuweisungseinheit (110), die dazu eingerichtet ist, jedem Funk-Kommunikationsendgerät (30) gemäß dem für das jeweilige Funk-Kommunikationsendgerät (30) ermittelten Kommunikationsmodus eine Funkressource zuzuweisen.

5. Das Funk-Kommunikationssystem gemäß Anspruch 4, wobei, wenn die Kommunikationseinheit (113) dazu eingerichtet ist, mit einer Vielzahl von Funk-Kommunikationsendgeräten (30) über verschiedene Relais-Geräte (20) mittels des Relais-Modus zu kommunizieren, die Zuweisungseinheit (110) dazu eingerichtet ist, zumindest einem aus der Vielzahl der Funk-Kommunikationsendgeräte (30) ausgewählten Funk-Kommunikationsendgerät (30) dieselbe Funkressource zuzuweisen, so dass die Kommunikationsqualität eines jeden aus der Vielzahl von Funk-Kommunikationsendgeräten (30) einen vorgegebenen Wert erreicht.

6. Das Funk-Kommunikationssystem gemäß Anspruch 4, wobei die Zuweisungseinheit (110) dazu eingerichtet ist, die Kommunikationsmodi für Funk-Kommunikationsendgeräte (30), denen dieselbe Funkressource zugewiesen ist, zwischen der Funk-Basisstation (10-1) und einer benachbarten Funk-Basisstation (10-2) zu koordinieren,

7. Das Funk-Kommunikationssystem gemäß Anspruch 1, wobei die Kommunikationseinheit (113) dazu eingerichtet ist, mit einem Funk-Kommunikationsendgerät (30) zur Kommunikation mittels des Relais-Modus über eine Vielzahl von Relais-Geräten (20) zu kommunizieren.

8. Das Funk-Kommunikationssystem gemäß Anspruch 1, wobei die Kommunikationseinheit (113) dazu eingerichtet ist, mit einem Funk-Kommunikationsendgerät (30) zum Kommunizieren mittels des Relais-Modus über ein Relais-Gerät (20) zum Senden und Empfangen desselben Signals wie das der Funk-Basisstation (10-1) an/von eine(r) andere(n) Funk-Basisstation (10-2) zu kommunizieren.

9. Das Funk-Kommunikationssystem gemäß einem der Ansprüche 1 bis 8, wobei das Relais-Gerät (20) weiter aufweist:
eine Schleifeninterferenzsignal-Ermittlungseinheit (210), die dazu eingerichtet ist, zu ermitteln, ob oder ob nicht die Empfangsleistung eines Schleifeninterferenzsignals in dem empfangenen Signal ein vorgegebener Wert oder mehr ist; und
eine Frequenz-Konvertierungs-Einheit (211), die dazu eingerichtet ist, eine Frequenz des empfangenen Signals in eine andere Frequenz zu konvertieren, wenn die Empfangsleistung des Schleifeninterferenzsignals in dem empfangenen Signal der vorgegebene Wert oder mehr ist.

10. Ein Funk-Kommunikationsverfahren in einem Funk-Kommunikationssystem enthaltend eine Funk-Basisstation (10) und mindestens ein Relais-Gerät (20), dem eine Identifizierungsinformation zugeordnet ist und das sich in einer von der Funk-Basisstation (10) gebildeten Zelle befindet, zum Kommunizieren mit zumindest einem Funk-Kommunikationsendgerät, aufweisend:
in der Funk-Basisstation (10), das Akquirieren einer Empfangsleistungsinformation eines ersten Steuersignals empfangen durch das jeweilige Funk-Kommunikationsendgerät (30) von der Funk-Basisstation (10) und einer Empfangsleistungsinformation eines zweiten Steuersignals empfangen durch das jeweilige Funk-Kommunikationsendgerät von dem Relais-Gerät (20) von jedem Funk-Kommunikationsendgerät; **dadurch gekennzeichnet, dass**
in der Funk-Basisstation (10), das Ermitteln (30) eines Kommunikationsmodus aus einem direkten Modus zum Kommunizieren nicht über das Relais-Gerät (20), einem Relais-Modus zum Kommunizieren über das Relais-Gerät (20) durch Verwendung eines gerichteten Strahls übertragen zwischen der Funk-Basisstation (10) und dem Relais-Gerät (20), und einem kombinierten Modus zum Kommunizieren durch das Kombinieren des direkten Modus und des Relais-Modus, für jedes Funk-Kommunikationsendgerät basierend auf den Empfangsleistungsinformationen akquiriert von dem jeweiligen Funk-Kommunikationsendgerät (30); und
in der Funk-Basisstation (10), das Kommunizieren mit jedem Funk-Kommunikationsendgerät (30) unter Verwendung des für das jeweilige Funk-Kommunikationsendgerät (30) ermittelten Kommunikationsmodus, und
in dem Relais-Gerät (20) von einem "Verstärken-und-Weiterleiten"-Typ ("Amplify-and-Forward, AF), das Steuern, ob oder ob nicht ein von der Funk-Basisstation (10) empfangenes Signal weitergeleitet wird, basierend darauf ob oder ob nicht das empfangene Signal eine Identifizierungsinformation des Relais-Geräts (20) enthält; wobei
ein Datensignal, übertragen von der Funk-Basisstation (10) an ein Funk-Kommunikationsendgerät (30), für das von der Kommunikationsmodus-Ermittlungseinheit (109)der Relais-Modus ermittelt wurde, die Identifizierungsinformation des Relais-Geräts (20) enthält, während ein Datensignal, übertragen von der Funk-Basisstation (10) an ein Funk-Kommunikationsendgerät (30), für das von der Kommunikationsmodus-Ermittlungseinheit der direkte Modus ermittelt wurde, die Identifizierungsinformation des Relais-Geräts (20) nicht enthält.

## Revendications

1. Système de radiocommunication comprenant une station de base radio (10) pour communiquer avec au moins terminal de radiocommunication et un appareil relais (20) figurant dans une cellule formée par la station de base radio (10), où
la station de base radio (10) comprends :
une unité d'acquisition (108) configurée pour obtenir de chaque terminal de radiocommunication une information de puissance de réception d'un premier signal de contrôle reçu en provenance de la station de base radio (10) par le terminal de radiocommunication respectif (30) et une information de puissance de réception d'un deuxième signal de contrôle reçu en provenance de l'appareil relais (20) par le terminal de radiocommunication respectif ; et **caractérisé en ce que**
la station de base radio comporte en outre
une unité de détermination d'un mode de communication (109) configurée pour déterminer, sur la base de l'information de puissance de réception obtenue du terminal de radiocommunication respectif (30), un mode de communication pour chaque terminal de radiocommunication (30) parmi un mode direct pour communiquer sans passer par l'appareil relais (20), un mode relais pour communiquer via l'appareil relais (20) en utilisant un faisceau directionnel transmis entre la station de base radio (10) et l'appareil relais (20), et un mode combiné pour communiquer en combinant le mode direct et le mode relais, et
une unité de communication (113) configurée pour communiquer avec chaque terminal de radiocommunication en utilisant le mode de communication déterminé pour le terminal de radiocommunication respectif, et
l'appareil relais (20) est de type amplification et acheminement (Amplify and Forward - AF) et comprends une unité de contrôle de relais (206) configurée pour contrôler, selon que le signal reçu comprends une information d'identification de l'appareil relais (20), si un signal reçu en provenance de la station de base radio (10) doit être relayé ou non, où
un signal de données transmis à partir de la station de base radio (10) vers un terminal de radiocommunication (30) pour lequel le mode relais est déterminé par l'unité de détermination d'un mode de communication (109) comprends l'information d'identification de l'appareil relais (20) tandis qu'un signal de données transmis à partir de la station de base radio (10) vers un terminal de radiocommunication (30) pour lequel le mode direct est déterminé par l'unité de détermination d'un mode de communication ne comprends pas l'information d'identification de l'appareil relais (20).

2. Système de radiocommunication selon la revendication 1, où le mode combiné comprends un mode d'augmentation de capacité pour communiquer avec un terminal de radiocommunication (30) par le mode direct tout en communiquant avec un autre terminal de radiocommunication (30) par le mode relais en utilisant la même ressource radio.

3. Système de radiocommunication selon la revendication 1, où le mode combiné comprends un mode d'extension de zone pour communiquer avec un terminal de radiocommunication (30) en mode direct et en mode relais en utilisant la même ressource radio.

4. Système de radiocommunication selon la revendication 1, où la station radio de base comprends en outre une unité d'allocation configurée pour allouer une ressource radio à chaque terminal de radiocommunication (30) en fonction du mode de communication déterminé pour le terminal de radiocommunication respectif (30).

5. Système de radiocommunication selon la revendication 4, où, lorsque l'unité de communication (113) est configurée pour communiquer en mode relais via différents appareils relais (20) avec une pluralité de terminaux de radiocommunication (30), l'unité d'allocation (110) est configurée pour allouer la même ressource radio à au moins un terminal de radiocommunication (30) sélectionné parmi la pluralité de terminaux de radiocommunication (30) de sorte que la qualité de communication de chacun de la pluralité de terminaux de radiocommunication (30) correspond à une valeur prédéterminée.

6. Système de radiocommunication selon la revendication 4, où l'unité d'allocation (110) est configurée pour coordonner des modes de communication de terminaux de radiocommunication (30) auxquels la même ressource radio est allouée entre la station de base radio (10-1) et une station de base radio adjacente (10-2).

7. Système de radiocommunication selon la revendication 1, où l'unité de communication (113) est configurée pour communiquer avec un terminal de radiocommunication (30) communiquant en mode relais via une pluralité d'appareils relais (20).

8. Système de radiocommunication selon la revendication 1, où l'unité de communication (113) est configurée pour communiquer avec un terminal de radiocommunication (30) communiquant en mode relais via un appareil relais (20) transmettant et recevant le même signal que celui de la station de base radio (10-1) vers/provenant d'une autre station de base radio (10-2)

9. Système de radiocommunication selon l'une quelconque des revendications 1 à 8, où l'appareil relais (20) comprend en outre :
une unité de détermination d'un signal à interférence de boucle (210) configuré pour déterminer si une puissance de réception d'un signal à interférence de boucle dans le signal reçu correspond à une valeur prédéterminée ou plus ; et
une unité de conversion de fréquence (211) configuré pour convertir une fréquence du signal reçu en une autre fréquence lorsque la puissance de réception du signal à interférence de boucle dans le signal reçu correspond à la valeur prédéterminée ou plus.

10. Méthode de radiocommunication dans un système de radiocommunication comprenant une station de base radio (10) et au moins un appareil relais (20) ayant une information d'identification assignée prévus dans une cellule formée par la station de base radio (10) pour communiquer avec au moins un terminal de radiocommunication, comprenant :
l'acquisition, dans la station de base radio (10), à partir de chaque terminal de radiocommunication (30), d'une information de puissance de réception d'un premier signal de contrôle reçu en provenance de la station de base radio (10) par le terminal de radiocommunication respectif (30) et une information de puissance de réception d'un deuxième signal de contrôle reçu en provenance de l'appareil relais (20) par le terminal de radiocommunication respectif (30) ; **caractérisée par**
la détermination, dans la station de base radio (10), sur la base de l'information de puissance de réception obtenue du terminal de radiocommunication respectif (30), d'un mode de communication pour chaque terminal de radiocommunication (30) parmi un mode direct pour communiquer sans passer par l'appareil relais (20), un mode relais pour communiquer via l'appareil relais (20) en utilisant un faisceau directionnel transmis entre la station de base radio (10) et l'appareil relais (20), et un mode combiné pour communiquer en combinant le mode direct et le mode relais ;
la communication, dans la station de base radio (10), avec chaque terminal de radiocommunication (30) en utilisant le mode de communication déterminé pour le terminal de radiocommunication (30) respectif ; et
le contrôle, dans l'appareil relais (20) de type amplification et acheminement (AF), si un signal reçu en provenance de la station de base radio (10) doit être relayé ou non selon que le signal reçu comprends une information d'identification de l'appareil relais (20) ; où
un signal de données transmis à partir de la station de base radio (10) vers un terminal de radiocommunication (30), pour lequel le mode relais est déterminé par l'unité de détermination d'un mode de communication (109), comprends l'information d'identification de l'appareil relais (20), tandis qu'un signal de données transmis à partir de la station de base radio (10) vers un terminal de radiocommunication (30) pour lequel le mode direct est déterminé par l'unité de détermination d'un mode de communication ne comprends pas l'information d'identification de l'appareil relais (20).
